# EUROPEAN PATENT APPLICATION

(11) **EP 4 485 369 A1**
(43) Date of publication of application: **01.01.2025**
(21) Application number: 24172613.2
(22) Date of filing: 26.04.2024
(51) Int. Cl.: G06V 10/34, G06V 20/52, G06V 40/20

(54) **INFORMATION PROCESSING PROGRAM, INFORMATION PROCESSING METHOD, AND INFORMATION PROCESSING APPARATUS**

(30) Priority: 26.06.2023 JP 2023104038
(71) Applicant: FUJITSU LIMITED, Kawasaki-shi, Kanagawa 211-8588 (JP)
(72) Inventor: MIYAHARA, Natsuki, Kawasaki-shi, Kanagawa, 211-8588 (JP); KIKUCHI, Takashi, Kawasaki-shi, Kanagawa, 211-8588 (JP); ENDO, Arisu, Kawasaki-shi, Kanagawa, 211-8588 (JP); KOHATA, Shun, Kawasaki-shi, Kanagawa, 211-8588 (JP)
(74) Representative: Hoffmann Eitle

(57) **Abstract**

An information processing program causes a computer to execute a process including acquiring a video that is captured by one or more camera apparatuses identifying a relationship for identifying a correlation between an object and a person included in the video by analyzing the acquired video determining whether the person has performed an abnormal behavior on a product on an outside of an imaging range of the camera apparatus based on the identified relationship and giving an alert based on a determination result on whether the person has performed the abnormal behavior on the product on the outside of the imaging range.

## Description

### FIELD

The embodiment discussed herein is related to an information processing program, an information processing method, and an information processing apparatus that identifies a person who performs an abnormal behavior and the behavior from a video.

### BACKGROUND

For example, a technology for identifying a person who performs an abnormal behavior, such as shoplifting, from a monitoring video that is captured in any kind of facility, such as a store, by causing a computer to perform image recognition, and issuing an alert for giving a notice of abnormality is known. With this technology, it is possible to prevent occurrence of an incident.

In the technology as described above, for example, bounding boxes (Bboxes) that are rectangles enclosing areas including an object and a person are extracted from a video by using a machine learning model, and it is determined whether the person is performing an abnormal behavior by a positional relationship of the Bboxes.

Patent Literature 1: Japanese Laid-open Patent Publication No. 2022-165483
However, it is difficult to detect a person or an object located in a blind spot of a monitoring camera, and therefore, it is not easy to accurately determine an abnormal behavior of the person form a video. Meanwhile, the blind spot of the monitoring camera may be, for example, a blind spot that occurs between imaging ranges of a plurality of cameras when the plurality of cameras capture images of different areas or a blind spot that occurs on the outside of an imaging range of a single camera, such as a swinging camera.

Accordingly, it is an object in one aspect of an embodiment of the present invention to provide an information processing program, an information processing method, and an information processing apparatus capable of accurately determining that a person is performing an abnormal behavior from a video and issuing a notice.

### SUMMARY

According to an aspect of an embodiment, an information processing program causes a computer to execute a process includes acquiring a video that is captured by one or more camera apparatuses identifying a relationship for identifying a correlation between an object and a person included in the video by analyzing the acquired video determining whether the person has performed an abnormal behavior on a product on an outside of an imaging range of the camera apparatus based on the identified relationship and giving an alert based on a determination result on whether the person has performed the abnormal behavior on the product on the outside of the imaging range.

### BRIEF DESCRIPTION OF DRAWINGS

FIG. 1 is a diagram illustrating an example of image capturing performed by monitoring cameras;
FIG. 2 is a diagram illustrating another example of image capturing performed by a monitoring camera;
FIG. 3 is a diagram illustrating a configuration example of an information processing system 1 according to the present embodiment;
FIG. 4 is a diagram illustrating a configuration example of an information processing apparatus 10 according to the present embodiment;
FIG. 5 is a diagram illustrating an example of information that is stored in a camera installation DB 14 according to the present embodiment;
FIG. 6 is a diagram illustrating an example of information that is stored in a rule DB 16 according to the present embodiment;
FIG. 7 is a diagram illustrating an example of relationship identification based on a scene graph according to the present embodiment;
FIG. 8 is a diagram for explaining a problem with generation of the scene graph;
FIG. 9 is a diagram illustrating an example of generation of an Attention map according to the present embodiment;
FIG. 10 is a diagram illustrating an example of a configuration of a NN for relationship estimation according to the present embodiment;
FIG. 11 is a diagram illustrating an example of image feature extraction according to the present embodiment;
FIG. 12 is a diagram illustrating an example of object detection according to the present embodiment;
FIG. 13 is a diagram illustrating an example of generation of a pair feature value according to the present embodiment;
FIG. 14 is a diagram illustrating an example of relationship feature extraction according to the present embodiment;
FIG. 15 is a diagram illustrating an example of relationship estimation according to the present embodiment;
FIG. 16 is a diagram illustrating an example of skeleton information according to the present embodiment;
FIG. 17 is a diagram illustrating an example of postures determination on a whole body according to the present embodiment;
FIG. 18 is a diagram illustrating an example of detection of a motion of each part according to the present embodiment;
FIG. 19 is a diagram illustrating an example of calculation of a projective transformation coefficient according to the present embodiment;
FIG. 20 is a diagram illustrating an example of transformation from an image coordinate system to a floor map coordinate system according to the present embodiment;
FIG. 21 is a flowchart illustrating the flow of an abnormal behavior notification process according to the present embodiment;
FIG. 22 is a flowchart illustrating the flow of a relationship estimation process according to the present embodiment; and
FIG. 23 is a diagram for explaining a hardware configuration example of the information processing apparatus 10.

### DESCRIPTION OF EMBODIMENT(S)

Preferred embodiments of the present invention will be explained with reference to accompanying drawings. The present embodiment is not limited by the exemplary modes below. Further, each of the exemplary modes may be combined appropriately as long as no contradiction is derived.

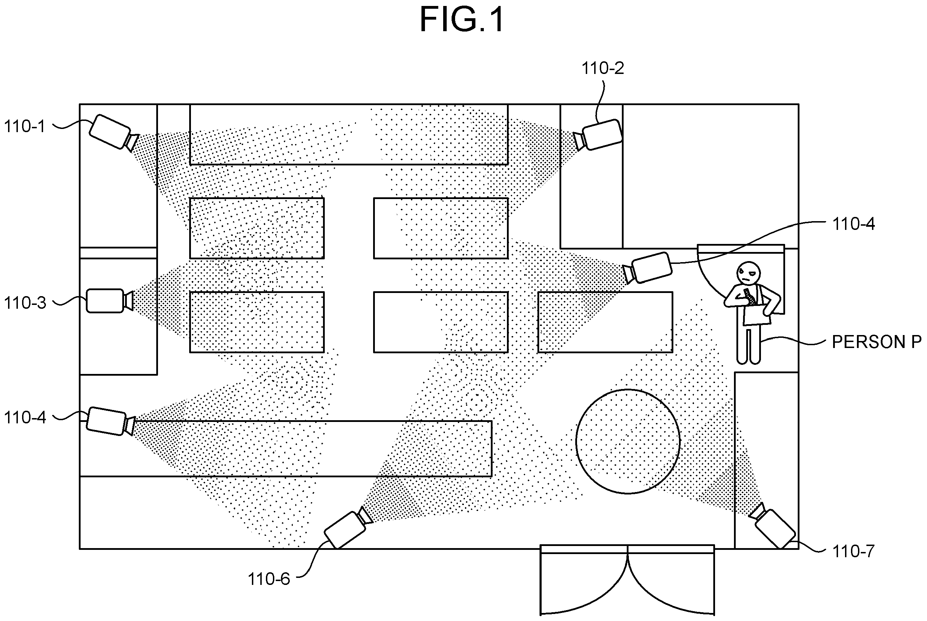

First, image capturing performed by a monitoring camera and a blind angle of an imaging range will be described. FIG. 1 is a diagram illustrating an example of image capturing performed by monitoring cameras. FIG. 1 illustrates an example in which camera apparatuses 110-1 to 110-7 (hereinafter, collectively referred to as "camera apparatuses 110") that are a plurality of monitoring cameras capture images in any kind of facility, such as a store. Further, in FIG. 1, it is assumed that the camera apparatuses 110 are fixed cameras and portions indicated by halftone dots represent approximate imaging ranges of the camera apparatuses 110.

More than a few blind spots occur with respect to the imaging ranges of the camera apparatuses 110, although it depends on the number of the installed camera apparatuses 110 or a size of the facility in which image capturing is performed. In FIG. 1, for example, a position at which a person P is present is a blind spot between the imaging ranges and is not captured in any of the imaging ranges of the camera apparatuses 110-1 to 110-7. For example, if an abnormal behavior, such as shoplifting or a behavior that leads to shoplifting, is performed at this position, it is difficult to determine whether the person P has performed the abnormal behavior, by a conventional method such as a method of detecting an object and a person from a video of the camera apparatus 110 and performing image recognition. Meanwhile, shoplifting or a behavior that leads to shoplifting is, for example, a behavior of putting a product into a bag of the person P before payment or the like; however, this behavior does not result in shoplifting unless the person P goes out of the store with the unpaid product, and therefore, this behavior will be described as shoplifting or a behavior that leads to shoplifting. Meanwhile, in the following, shoplifting or a behavior that leads to shoplifting may be simply referred to as "shoplifting or the like".

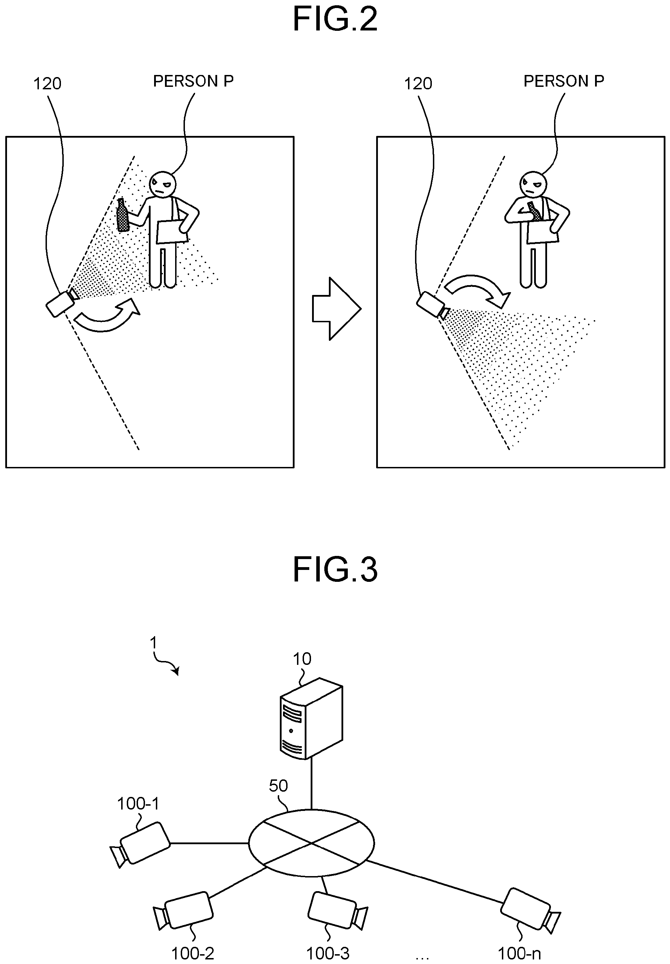

FIG. 2 is a diagram illustrating another example of image capturing performed by a monitoring camera. Similarly to FIG. 1, FIG. 2 illustrates a camera apparatus 120 that is a monitoring camera that captures an image inside any kind of facility, such as a store; however, the camera apparatus 120 is what is called a swinging camera. Therefore, as illustrated in FIG. 2, an imaging range of the camera apparatus 120 moves in a range as indicated by dashed lines, for example.

The imaging range of the camera apparatus 120 moves as described above, and therefore, a position that is captured at a certain time is located out of the imaging range and located in a blind spot at a different time. For example, the person P is captured in the imaging range of the camera apparatus 120 on the left side in FIG. 2, but the person P is not captured on the right side in FIG. 2 because the imaging range is moved. For example, if the person P performs an abnormal behavior, such as shoplifting, at a timing as in the right side in FIG. 2, it is difficult to determine, by the conventional method, whether the person P has performed an abnormal behavior similarly to the case of the plurality of camera apparatuses 110 as illustrated in FIG. 1.

### Overall configuration

An information processing system for implementing the present embodiment will be described below. FIG. 3 is a diagram illustrating a configuration example of an information processing system 1 according to the present embodiment. As illustrated in FIG. 3, the information processing system 1 is a system in which an information processing apparatus 10 and camera apparatuses 100-1 to 100-n (n is an arbitrary natural number) are communicably connected to one another via a network 50. Meanwhile, in the following, the camera apparatuses 100-1 to 100-n will be collectively referred to as a "camera apparatus 100".

As the network 50, for example, it is possible to adopt any kind of a communication network, such as an intranet or the Internet, that used in any kind of facility, such as a store, regardless of whether the network is wired or wireless. Further, the network 50 need not always be a single network, but may be configured with, for example, an intranet and the Internet via a network device, such as a gateway, or a different device (not illustrated). Meanwhile, "in a facility" does not always indicate the inside of the facility, but may include the outside of the facility.

The information processing apparatus 10 is, for example, an information processing apparatus, such as a desktop personal computer (PC), a notebook PC, or a server computer, that is installed in any kind of facility, such as a store, and used by a security guard or the like. Alternatively, the information processing apparatus 10 may be a cloud computer apparatus that is managed by a service provider who provides a cloud computing service.

The information processing apparatus 10 receives, from the camera apparatus 100, a captured video of a predetermined imaging range in any kind of facility, such as a store, for example. Meanwhile, in a strict sense, the video includes a plurality of captured images that are captured by the camera apparatus 100, that is, a series of frames of moving images.

Further, the information processing apparatus 10 extracts an object including a person in any kind of facility, such as a store, from the video captured by the camera apparatus 100 by using a well-known technology, for example. Meanwhile, extraction of object from the video may be extraction of a bounding box (Bbox) that is a rectangle enclosing an area including an object and a person from the video, for example. Furthermore, the information processing apparatus 10 identifies a relationship for identifying a correlation between an object and a person, such as the person holding or carrying the object, for example.

Moreover, the information processing apparatus 10 determines whether the person has performed an abnormal behavior on a product based on the identified relationship between the object and the person, for example. The abnormal behavior described herein indicates, for example, shoplifting or the like, and in particular, the information processing apparatus 10 determines whether the person has performed an abnormal behavior on the product on an outside of an imaging range of the camera apparatus 100 based on the identified relationship between the object and the person.

Furthermore, when determining that the person has performed an abnormal behavior on the product, the information processing apparatus 10 issues an alert related to appearance of the person who has performed the abnormal behavior, for example. Meanwhile, the alert is a mere warning, and a suspicious person who may have performed the abnormal behavior may be included in the person who has performed the abnormal behavior, for example. Moreover, the alert may be, for example, output of a voice, a notice of a message notification on a screen, or the like. Furthermore, a notification destination of the alert may be, for example, an output device included in the information processing apparatus 10, an externally-attached device, or a different output device that is communicably connected to the information processing apparatus 10 via the network 50.

Moreover, the information processing apparatus 10 may identify a location of the person who has performed an abnormal behavior based on an installation location of the camera apparatus 100 that has captured a video in which the relationship between the object and the person is identified or the like, and limit a notification destination of the alert, for example. Meanwhile, limitation of the notification destination of the alert indicates that, for example, a notice of the alert is limited to an information processing terminal that is carried by a security guard who is present near the person who has performed the abnormal behavior, a PC that is installed near the location of the person who has performed the abnormal behavior, or the like.

Furthermore, a security guard or the like in any kind of facility, such as a store, is able to receive a notice of the alert and prevent occurrence of shoplifting or the like by paying attention to the person who has performed the abnormal behavior and stopping the abnormal behavior.

Meanwhile, in FIG. 3, the information processing apparatus 10 is illustrated as a single computer, but may be a distributed computing system that includes a plurality of computers.

The camera apparatus 100 is a monitoring camera that is installed in, for example, any kind of facility, such as a store. The camera apparatus 100 may be, for example, the camera apparatuses 110 that are a plurality of monitoring cameras, the camera apparatus 120 that is a swinging camera, or the like as explained above with reference to FIG. 1 and FIG. 2. Meanwhile, FIG. 3 illustrates the plurality of camera apparatuses 100, but it may be possible to provide the single camera apparatus 100 depending on the scale of the imaging range or when the camera apparatus 100 is a swinging camera. Further, the camera apparatus 100 transmits, for example, a captured video to the information processing apparatus 10.

### Functional configuration of information processing apparatus 10

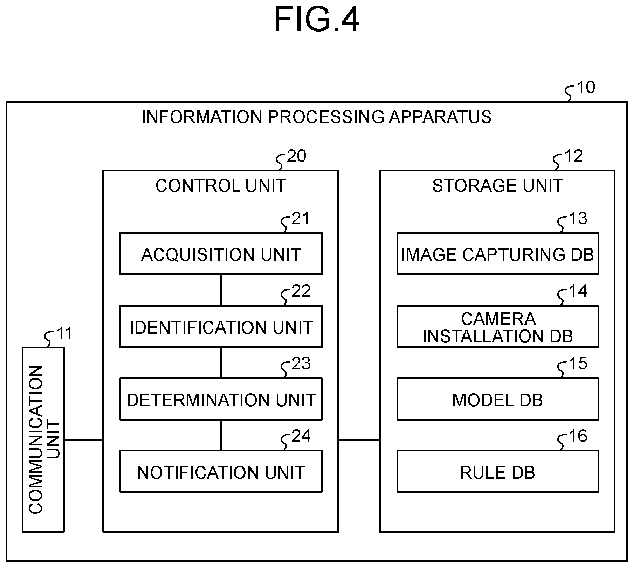

A functional configuration of the information processing apparatus 10 will be described below. FIG. 4 is a diagram illustrating a configuration example of the information processing apparatus 10 according to the present embodiment. As illustrated in FIG. 4, the information processing apparatus 10 includes a communication unit 11, a storage unit 12, and a control unit 20.

The communication unit 11 is a processing unit that controls communication with a different apparatus, such as the camera apparatus 100, and is, for example, a communication interface, such as a network interface card.

The storage unit 12 has a function to store various kinds of data and a program that is executed by the control unit 20, and is implemented by, for example, a storage apparatus, such as a memory or a hard disk. The storage unit 12 stores therein an image capturing DB 13, a camera installation DB 14, a model DB 15, a rule DB 16, and the like. Meanwhile, DB is an abbreviation of a database.

The image capturing DB 13 stores therein a plurality of captured images that are a series of frames captured by the camera apparatus 100. The plurality of captured images that are captured by the camera apparatus 100, that is, a video, is transmitted from the camera apparatus 100 as needed, received by the information processing apparatus 10, and stored in the image capturing DB 13.

The camera installation DB 14 stores therein information for identifying a place in which each of the camera apparatuses 100 is installed, for example. The information stored here may be set in advance by an administrator of the information processing system 1 or the like, for example.

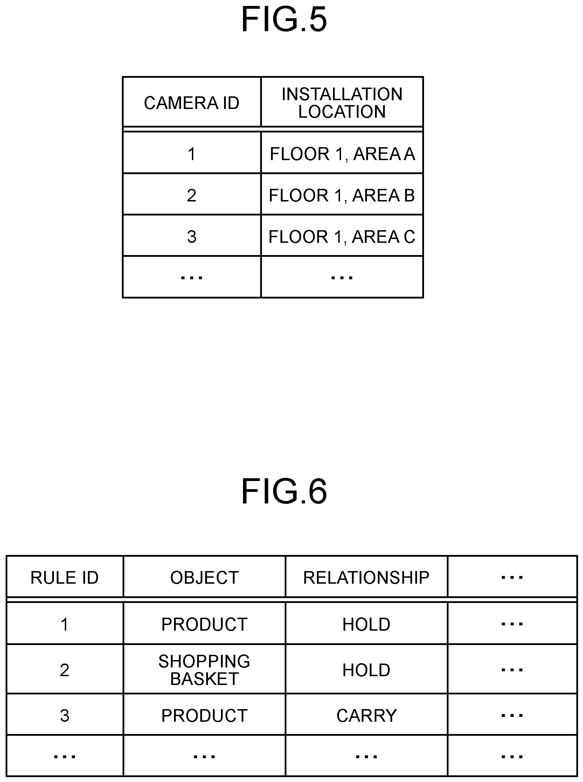

FIG. 5 is a diagram illustrating an example of information that is stored in the camera installation DB 14 according to the present embodiment. As illustrated in FIG. 5, the camera installation DB 14 stores therein, for example, various kinds of information, such as "a camera ID and an installation location", in an associated manner. In the "camera ID" stored here, for example, information, such as an identifier, for uniquely identifying each of the camera apparatuses 100 is set, and in the "installation location, for example, information for identifying a location in which each of the camera apparatuses 100 is installed is set. Meanwhile, when only the single camera apparatus 100 is installed for example, the storage unit 12 need not store therein the camera installation DB 14.

The model DB 15 stores therein, for example, information on a machine learning model for identifying areas including an object and a person and a relationship between the object and the person from a video that is captured by the camera apparatus 100, and a model parameter for constructing the machine learning model. The machine learning model is generated by machine learning by using, for example, the video that is captured by the camera apparatus 100, that is, the captured image, as input data and using the areas including the object and the person and a type of the relationship between the object and the person as ground truth labels. Meanwhile, the type of the relationship between the object and the person may be, for example, the person holding the object, the person carrying the object, or the like, but embodiments are not limited to this example. Further, the areas including the object and the person may be bounding boxes (Bboxes) that are rectangles enclosing the areas on the captured image, for example.

Furthermore, the model DB 15 stores therein, for example, information on a machine learning model for acquiring a type of an object for generating a scene graph from a video and a relationship between objects, and a model parameter for constructing the machine learning model. Meanwhile, the type of an object for generating a scene graph may be referred to as a "class", and the relationship between objects may be referred to as a "relation". Moreover, the machine learning model is generated by machine learning by using a video that is captured by the camera apparatus 100, that is, a captured image, as input data, and locations (Bboxes) of objects included in the captured image, types of the objects, and a relationship between the objects as ground truth labels.

Furthermore, the model DB 15 stores therein, for example, information on a machine learning model for generating an Attention map (to be described later), and a model parameter for constructing the machine learning model. The machine learning model is generated by, for example, training by using a feature value of an object detected from the captured image as input data and an important area in the image as a ground truth label. Meanwhile, various kinds of machine learning models may be trained and generated by the information processing apparatus 10 or by a different information processing apparatus.

The rule DB 16 stores therein, for example, information on a rule for determining that a person has performed an abnormal behavior on a product. The information stored herein may be set in advance by, for example, an administrator or the like of the information processing system 1.

FIG. 6 is a diagram illustrating an example of information that is stored in the rule DB 16 according to the present embodiment. As illustrated in FIG. 6, the rule DB 16 stores therein, for example, various kinds of information, such as "a rule ID, an object, and a relationship", in an associated manner. In the "rule ID" stored herein, for example, information, such as an identifier, for uniquely identifying a rule is set. Further, in the "object", for example, a name of an object or the like is set. Furthermore, in the "relationship", for example, a type of a relationship between an object and a person is set.

For example, if a person who is detected from a video indicates a relationship that is set in the "relationship" with respect to an object that is set in the "object" in the rule DB 16, the information processing apparatus 10 is able to determine that the person is likely to perform an abnormal behavior on the product. More specifically, for example, as indicated by a rule ID = 1 in FIG. 6, it is assumed that the relationship between the person and the product detected from the video indicates that the person "holds" the product. In this case, the information processing apparatus 10 is able to determine that, for example, the product is a target object of an abnormal behavior, that is, an object to be subjected to shoplifting or the like, and the person is likely to perform an abnormal behavior on the product. Meanwhile, the object that is detected from the video is not limited to the product, but, for example, it is possible to identify that an object indicating a certain relationship, that is, an object that the person takes out of a product shelf and "holds", is a product. A rule for identifying a product as described above may also be stored in, for example, the rule DB 16 or the like; however, it may be possible to train the machine learning model for identifying the areas including the object and the person and the relationship between the object and the person such that the machine learning model also identifies that the object is a product. Furthermore, as for identification of a product, it is not needed to identify details, such as a product name or a product type, but it is sufficient to identify that the object is a product.

Moreover, if the relationship of "hold" between the person and the product disappears in a video that is temporally later than the subject video, the information processing apparatus 10 is able to determine that, for example, the person may have performed an abnormal behavior, such as shoplifting, on the product. Meanwhile, when the relationship of "hold" between the person and the product disappears, the person may have put the product in a shopping basket or a shopping cart, and therefore, it may be possible to further add a determination condition for a case in which the person is not carrying a shopping basket or the like. The determination condition may also be stored in, for example, the rule DB 16 or the like because it is possible to perform determination based on the relationship between the person and the object, such as a relationship in which it is not indicated that the person "holds" a shopping basket or the like, for example.

Furthermore, if a behavior of putting the product into a bag of the person appears in the video, the information processing apparatus 10 is able to identify a location of occurrence of shoplifting or the like. However, even when the behavior does not appear, the information processing apparatus 10 is able to estimate a location of occurrence of shoplifting or the like from, for example, an installation location of the camera apparatus 100 that has captured the video in which the relationship between the person and the object is identified. More specifically, for example, explanation will be given using FIG. 1, and it is assumed that the relationship of "hold" between the person and the product is identified from the video that is captured by the camera apparatus 110-4, but the relationship disappears in the video that is captured by the camera apparatus 110-7. In this case, the information processing apparatus 10 is able to determine that, for example, a certain behavior, such as shoplifting, is performed in an area between the imaging range of the camera apparatus 110-4 and the imaging range of the camera apparatus 110-7 (for example, a location in which a person P is present in FIG. 1).

Moreover, as an example of the abnormal behavior, such as shoplifting, for example, there may be a case in which the person once puts the product in a shopping basket or the like and then put the product in a bag of the person on the outside of the imaging range of the camera apparatus 100. Therefore, for example, as indicated by a rule ID = 2 in FIG. 6, if a relationship between the person and the shopping basket detected from the video indicates that the person "holds" the shopping basket, a relationship between the person and the product in the shopping basket is "carry". Therefore, as indicated by a rule ID = 3 in FIG. 6, if the relationship between the person and the product is "carry", the information processing apparatus 10 is able to determine that, for example, the person is likely to perform the abnormal behavior on the product. Furthermore, similarly to "hold", if the relationship of "carry" between the person and the product disappears in a video that is temporally later than the subject video, the information processing apparatus 10 is able to determine that, for example, the person may have performed the abnormal behavior, such as shoplifting, on the product.

Moreover, as another example of the abnormal behavior, such as shoplifting, for example, there may be a case in which the person may take away the product by cutting a security chain by using a tool, such as a chain cutter. Therefore, if a relationship between the person and a chain cutter detected from the video indicates "hold" or "carry", the information processing apparatus 10 is able to determine that the person is likely to perform the abnormal behavior on the product. Furthermore, if the relationship between person and the product is "hold" or "carry" in a video that is temporally later than the subject video, the information processing apparatus 10 is able to determine that, for example, the person may have performed the abnormal behavior, such as shoplifting, on the product.

Moreover, it may be possible to determine the abnormal behavior based on a relationship between the person detected from the video and a bag carried by the person, rather than the relationship between the person and the product itself. For example, the relationship between the person and the bag detected from the video indicates "hold", the information processing apparatus 10 is able to determine that the person is likely to perform the abnormal behavior on the product. Furthermore, if the relationship between the person and the bag indicates "hold" and the bag is bigger in a video that is temporally later than the subject video, the information processing apparatus 10 is able to determine that, for example, the person may have performed the abnormal behavior, such as shoplifting, on the product.

In this manner, by setting the relationship between the person and the object that may lead to an abnormal behavior and that is alarming in the rule DB 16, it is possible to determine whether the person has performed the abnormal behavior from the relationship between the person and the object detected from the video. Meanwhile, the setting information in the rule DB 16 illustrated in FIG. 6 is a mere example, and embodiments are not limited to this example.

Furthermore, the information stored in the storage unit 12 as described above is a mere example, and the storage unit 12 may store various kinds of information other than the information as described above.

The control unit 20 is a processing unit that controls the entire information processing apparatus 10, and is, for example, a processor or the like. The control unit 20 includes an acquisition unit 21, an identification unit 22, a determination unit 23, and a notification unit 24. Meanwhile, each of the processing units is one example of an electronic circuit included in the processor or a process executed by the processor.

The acquisition unit 21 acquires a video that is captured by, for example, the single or more camera apparatuses 100 in any kind of facility, such as a store, from the image capturing DB 13. Meanwhile, the video that is captured by the camera apparatus 100 is transmitted by the camera apparatus 100 to the information processing apparatus 10, received by the information processing apparatus 10, and stored in the image capturing DB 13 as needed.

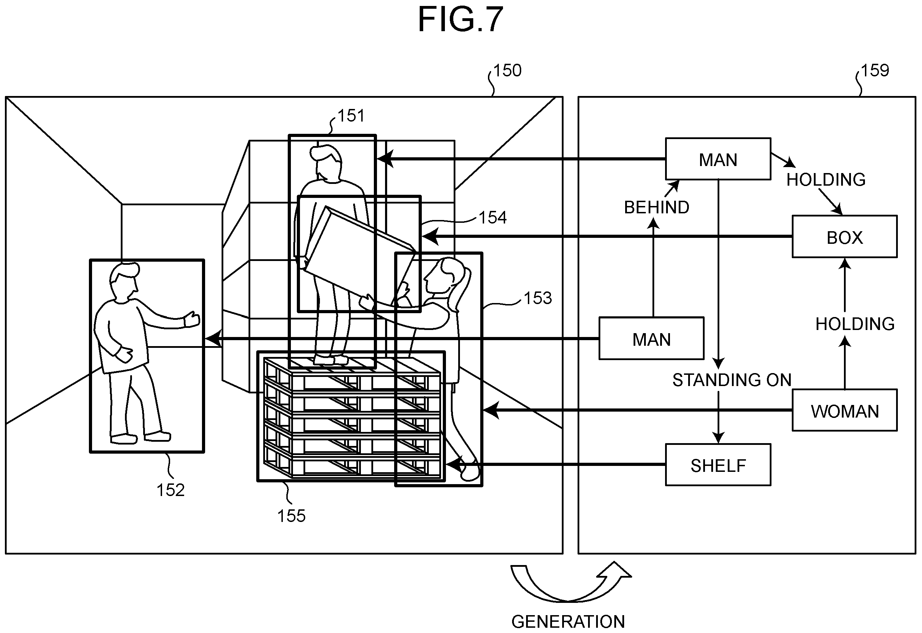

The identification unit 22 analyzes, for example, the video that is acquired by the acquisition unit 21, and identifies a relationship for identifying a correlation between an object and a person included in the video. Meanwhile, each of the object and the person included in the video may be, for example, a first area that includes the object and a second area that includes the person. Further, the first area and the second area may be, for example, bounding boxes (Bboxes). Furthermore, the relationship to be identified may include, for example, a type of the relationship indicating that the person holds the object or the person carries the object. Moreover, the identification process as described above may include a process of generating a scene graph in which the first area, the second area, and the relationship are identified for each person included in the video by inputting the video that is acquired by the acquisition unit 21 to the machine learning model, for example. Generation of the scene graph will be described in detail below with reference to FIG. 7.

FIG. 7 is a diagram illustrating an example of relationship identification based on a scene graph according to the present embodiment. A captured image 150 in FIG. 7 is, for example, a single frame of a video that is captured by the camera apparatus 100. The identification unit 22 detects, for example, objects including persons by using an existing detection algorithm from the captured image 150, estimates a relationship between the objects, and generates a scene graph 159 that represents the objects and the relationship between the objects, that is, a context. Here, examples of the existing detection algorithm include YOU Only Look Once (YOLO), Single Shot Multibox Detector (SSD), and Region Based Convolutional Neural Networks (RCNN).

In the example illustrated in FIG. 7, at least two men indicated by Bboxes 151 and 152, a woman indicated by a Bbox 153, a box indicated by a Bbox 154, and a shelf indicated by a Bbox 155 are detected from the captured image 150. Further, the identification unit 22 extracts, for example, a Bbox area of each of the objects including the persons from, for example, the captured image 150, extracts a feature value of each of the areas, estimates a relationship between the objects from the feature values of an object pair (Subject, Object), and generates the scene graph 159. In FIG. 7, for example, the scene graph 159 indicates a relationship of the man indicated by the Bbox 151 standing on the shelf indicated by the Bbox 155. Further, for example, the relationship of the man indicated by the Bbox 151 represented by the scene graph 159 is not limited to one. As illustrated in FIG. 7, in the scene graph 159, all of estimated relationships of being behind the man indicated by the Bbox 152 and holding the box indicated by the Bbox 154 are illustrated in addition to the relationship with respect to the shelf. In this manner, the identification unit 22 is able to identify the relationship between the object and the person included in the video by generating the scene graph.

However, even the scene graph has a problem, and therefore, by solving the problem, the identification unit 22 is able to more accurately identify the relationship between the object and the person included in the video.

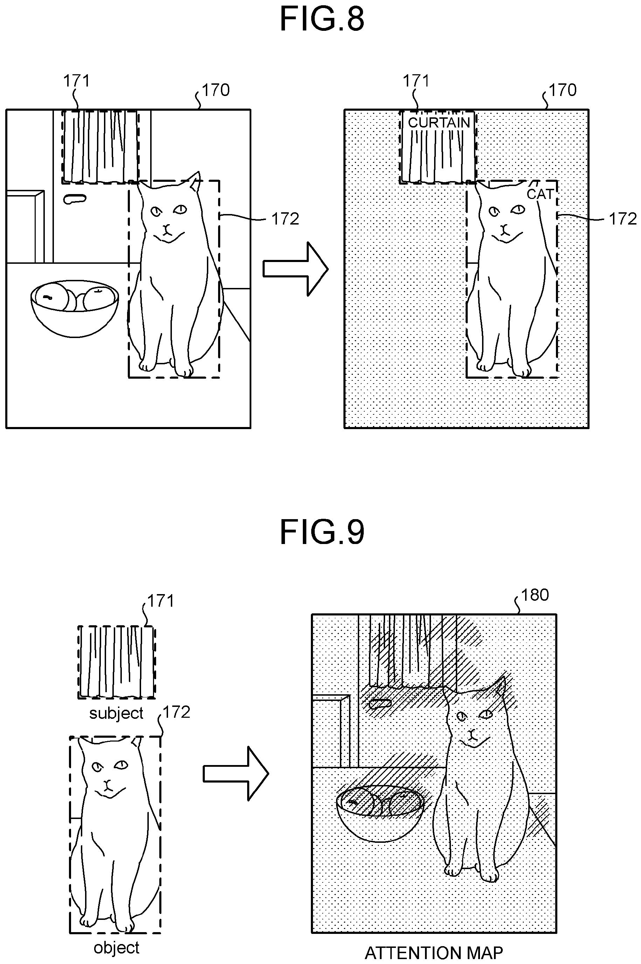

FIG. 8 is a diagram for explaining a problem with generation of a scene graph. In generation of a scene graph, for example, as illustrated in FIG. 8, individual objects are extracted from a captured image 170, and therefore, information that is located outside the areas of a Bbox 171 of a Subject and a Bbox 172 of an Object and that is important in terms of a context may be missed. More specifically, as indicated on the right side in FIG. 8, each of the areas of the Bbox 171 of a curtain and the Bbox 172 of a cat is extracted, but information on areas other than the extracted areas is not used for estimation of a relationship between the cat and the curtain. Therefore, if information that is important for estimation of the relationship between the cat and the curtain is present, the information is missed. For example, by paying attention to objects around the cat and the curtain and a structure of a room, it is possible to estimate that the curtain is present behind the cat, but, in general generation of a scene graph, information on surroundings is not used for estimation of the relationship between the cat and the curtain. Therefore, when a relationship between objects is to be estimated, it is possible to more accurately identify the relationship by using information on surroundings. For example, in the example illustrated in FIG. 8, in the captured image 170, an apple is present beside the cat, the cat and the apple are likely to be present on a table, and a curtain is hanging on a door, so that it is possible to estimate a relationship indicating that the curtain is present behind the cat.

Therefore, in the present embodiment, an area that is important in terms of a context is adaptively extracted from the entire image with respect to each of a target Subject and a target Object for which a relationship is to be estimated, and then a target relationship is recognized. The area that is important for recognition of the relationship is extracted by, for example, generating a map (hereinafter, referred to as an "Attention map") in which values 0 to 1 is assigned in accordance with an importance level.

FIG. 9 is a diagram illustrating an example of generation of an Attention map according to the present embodiment. As illustrated in FIG. 9, for example, when estimating the relationship between the curtain that is a Subject and the cat that is an Object, the identification unit 22 generates an Attention map 180 that represents important areas other than the areas of the Bboxes 171 and 172, and uses the Attention map 180 for estimation of the relationship. The Attention map 180 is generated by using a machine learning model that is generated by training by using, for example, feature values of objects detected from the captured image as input data and important areas on the image as ground truth labels, in order to improve recognition rate of the relationship between the objects. Further, in the Attention map 180, for example, as illustrated in FIG. 9, importance levels of areas that are important for estimation of the relationship between the Subject and the Object are represented by colors or shading. Meanwhile, it is difficult to recognize, in advance, a location of the area that is important in terms of context in the captured image, and therefore, the identification unit 22 generates the Attention map 180 with respect to the entire image, for example. With this configuration, the identification unit 22 is able to more accurately extract the area that is important in terms of a context, so that it is possible to more accurately identify a relationship between objects.

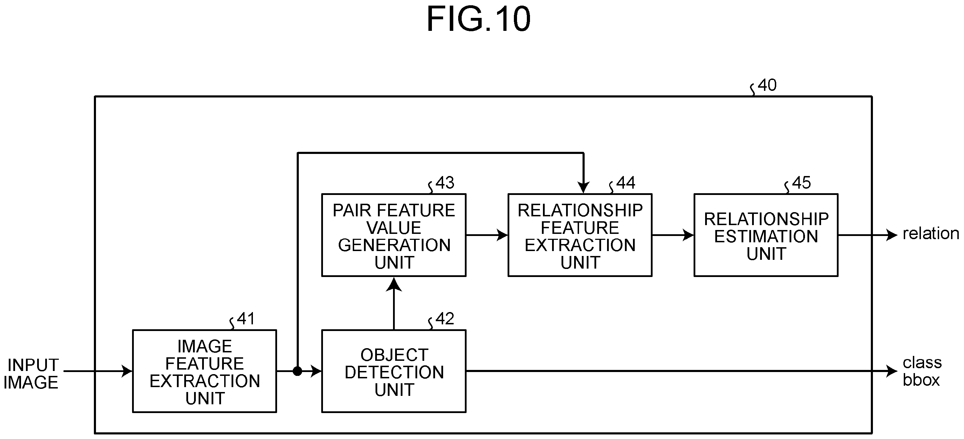

Estimation of a relationship between objects using the Attention map 180 will be described in detail below with reference to FIG. 10 to 15. Estimation of a relationship between objects using the Attention map 180 may be performed by using, for example, a neural network (NN).

FIG. 10 is a diagram illustrating an example of a configuration of a NN for relationship estimation according to the present embodiment. As illustrated in FIG. 10, a NN 40 for estimating a relationship between objects by using the Attention map 180 includes, for example, an image feature extraction unit 41, an object detection unit 42, a pair feature value generation unit 43, a relationship feature extraction unit 44, and a relationship estimation unit 45. For example, when a video in which a certain scene is captured, that is, a captured image, is input, the NN 40 causes the image feature extraction unit 41 to perform a certain process and outputs Bboxes of objects detected by the object detection unit 42 and types (classes) of the objects. Further, the NN 40 outputs a relationship (relation) between the objects detected by the object detection unit 42, where the relationship is estimated by the relationship estimation unit 45. A process performed by each of the processing units included in the NN 40 as described above will be described below for each process.

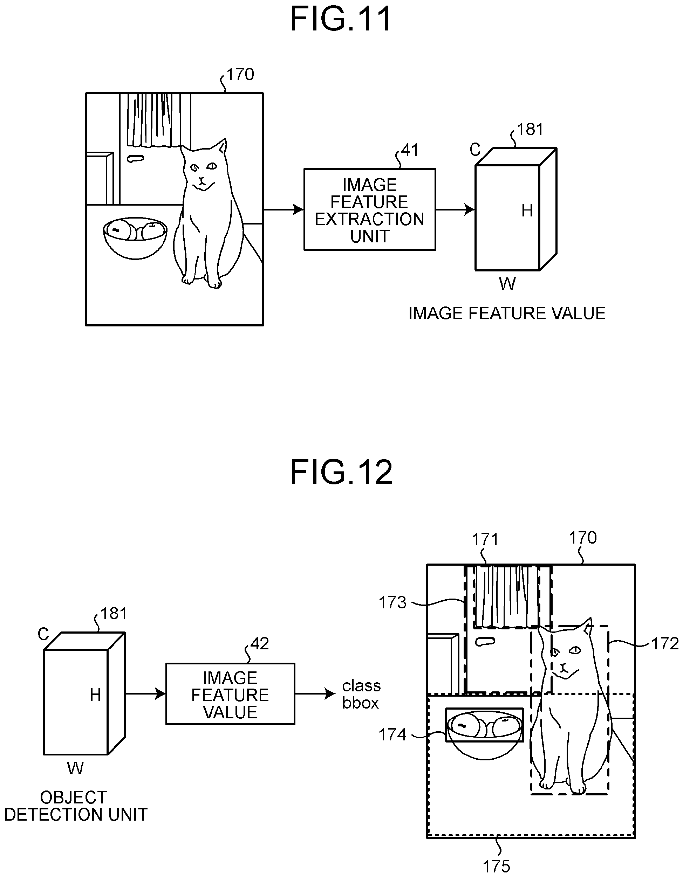

First, feature extraction from the captured image performed by the image feature extraction unit 41 will be described. FIG. 11 is a diagram illustrating an example of image feature extraction according to the present embodiment. As illustrated in FIG. 11, the image feature extraction unit 41 extracts, for example, an image feature value 181 of a C channel from the captured image 170 of RGB 3-channel. Meanwhile, the image feature extraction unit 41 may be configured with, for example, a Convolutional Neural Network (CNN) or Transformer that is an existing technology. Further, it is possible to use a CNN or a Transformer in which a Classification task or the like is trained in advance by a large-scale image data set, such as ImageNet. Furthermore, a width W and a height H of the image feature value are generally smaller than a width and a height of the input image, that is, the captured image 170 in the example in FIG. 11, due to the CNN or Pooling processing.

Object detection from the image feature value performed by the object detection unit 42 will be described below. FIG. 12 is a diagram illustrating an example of object detection according to the present embodiment. As illustrated in FIG. 12, the object detection unit 42 receives, for example, the image feature value 181 that is extracted by the image feature extraction unit 41, and outputs the Bboxes 171, 172, 173, and Bboxes 174 and 175 included in the captured image 170 and classes indicating types of the objects. Meanwhile, in the example illustrated in FIG. 12, the Bboxes 171 to 175 are represented by bbox. Further, as an output example, as illustrated on the right side in FIG. 12, the object detection unit 42 is able to draw and output the Bboxes 171 to 174 of the detected objects in an overlapping manner on the captured image, for example. Furthermore, it may be possible to output a class that indicates a type of each of the objects, such as the curtain or the cat, in the vicinity of each of the Bboxes.

Meanwhile, a rectangle of the Bbox may be represented by, for example, four real values, such as coordinates (x₁, y₂) of an upper left of the rectangle and coordinates (x₂, y₂) of a lower right of the rectangle. Further, the class that is output by the object detection unit 42 is, for example, a probability value indicating that the object detected in the Bbox is a detection target object that is determined in advance. More specifically, for example, if detection target objects are {cat, table, car}, in the example illustrated in FIG. 12, the class of the Bbox 172 corresponding to the cat is represented as a probability value of (0.9, 0.1, 0.2) indicating each of the detection target objects. Specifically, the class in this case indicates that the probability that the detected object is a cat, a table, and a car is 0.9, 0.1, and 0.2, respectively. Meanwhile, the object detection unit 42 may be configured with, for example, a Faster Region Based Convolutional Neural Networks (R-CNN), a Mask R-Cnn, DEtection TRansformer (DETR), or the like, that is a NN for object detection of the existing technology.

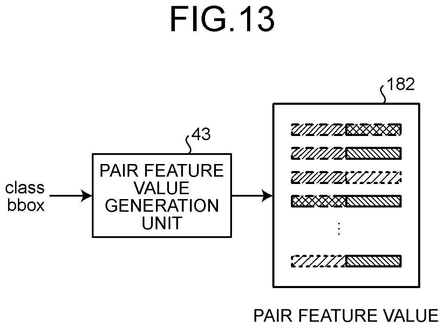

Feature values of a pair of the detected objects, which is obtained by the pair feature value generation unit 43, will be described below. FIG. 13 is a diagram illustrating an example of generation of a pair feature value according to the present embodiment the pair feature value. As illustrated in FIG. 13, the pair feature value generation unit 43 detects a feature value of each of the detected objects, for each of the objects, based on the objects detected by the object detection unit 42, that is, the output class and the output Bbox, for example. At this time, the pair feature value generation unit 43 is able to use RoIAlign or the like in Mask R-CNN. Further, if the object detection unit 42 is configured with the DETR, it is possible to use a feature value of each of the objects output by a Transformer decoder as it is. Furthermore, the feature value to be extracted may be a 256-dimensional real vector for each of the objects, for example.

Moreover, the pair feature value generation unit 43 forms pairs as combinations of all of the detected objects while adopting one of the objects as a Subject and the other one of the objects as an Object. In a pair feature value 182 illustrated on the right side in FIG. 13, feature values of the Subject and the Object are arranged for each of the pairs. Further, the pair feature value generation unit 43 may convert the feature values of the Subject and the Object as a pair by Multi LayerPerception (MLP) that is an existing technology in order to adjust the number of dimensions of the pair feature value 182.

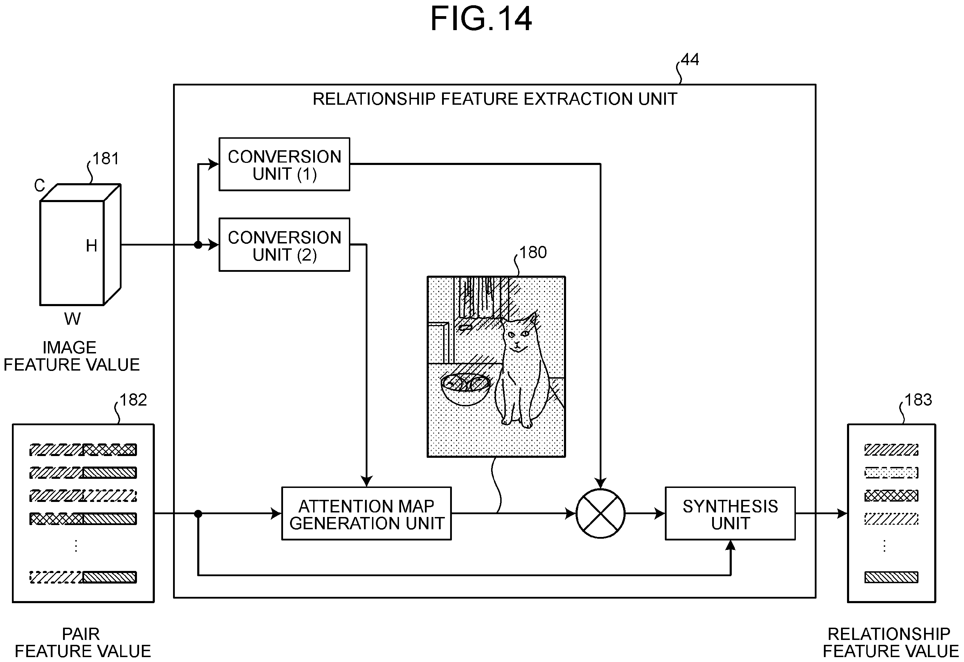

Extraction of feature values indicating a relationship between the detected objects as a pair, which is performed by the relationship feature extraction unit 44, will be described below. FIG. 14 is a diagram illustrating an example of relationship feature extraction according to the present embodiment. As illustrated in FIG. 14, the relationship feature extraction unit 44 includes, for example, a conversion unit (1), a conversion unit (2), an Attention map generation unit, and a synthesis unit.

First, as illustrated in FIG. 14, the relationship feature extraction unit 44 coverts, by each of the conversion unit (1) and the conversion unit (2), the image feature value 181 that is extracted by the image feature extraction unit 41 for use in subsequent processes. The conversion unit (1) and the conversion unit (2) may be implemented by, for example, Multi LayerPerception (MLP) or the like. Further, in the example illustrated in FIG. 14, the conversion unit (1) and the conversion unit (2) are implemented by MLPs with different weights and therefore separated into 1 and 2.

Subsequently, the relationship feature extraction unit 44 generates, by the Attention map generation unit, the Attention map 180 by making a correlation with the image feature value that is converted by the conversion unit (1) for each row of the pair feature value 182 that is generated by the pair feature value generation unit 43. Meanwhile, each row of the pair feature value 182 indicates each pair of the Subject and the Object. Further, the relationship feature extraction unit 44 may convert the Attention map 180 by MLP or Layer normalization after making a correlation between the pair feature value 182 and the image feature value that is converted by the conversion unit (1).

A correlation process between the single pair feature value 182 and the image feature value that is converted by the conversion unit (1) will be described in detail below. Meanwhile, it is assumed that the pair feature value 182 is adjusted to a C-dimensional vector through a previous process. Further, it is assumed that the image feature value converted by the conversion unit (1) is a tensor of H × W and a C-dimensional channel direction. Furthermore, a pixel (x, y) at which the image feature value converted by the conversion unit (1) is paid attention to, and adopted as a pixel of interest. The pixel of interest is represented by 1 × 1 × C, and therefore, is regarded as a C-dimensional vector. Moreover, the Attention map generation unit makes a correlation between the C-dimensional vector of the pixel of interest and the pair feature value 182 that is adjusted to the C-dimensional vector, and calculates a correlation value (scalar). Accordingly, the correlation value at the pixel of interest (x, y) is determined. The Attention map generation unit performs the above-described process on all of pixels and generates the Attention map 180 of H × W × 1.

Further, the relationship feature extraction unit 44 multiplies the image feature value converted by the conversion unit (2) by the generated Attention map 180 to obtain a weighted sum, and extracts a feature value of an important area in the entire image corresponding to the pair of the Subject and the Object. Meanwhile, the weighted sum is obtained in the entire image, and therefore, the feature value that takes the weighted sum is a C-dimensional feature value for a single pair of the Subject and the Object.

Furthermore, a weighted sum between the Attention map 180 and the image feature value converted by the conversion unit (2) will be described in detail below. Meanwhile, it is assumed that the image feature value converted by the conversion unit (2) is a tensor of H × W × C. First, the relationship feature extraction unit 44 multiplies the image feature value converted by the conversion unit (2) by the Attention map 180. In this case, the Attention map 180 is represented by H × W × 1, and therefore, a channel is copied in a C-dimension. Moreover, the relationship feature extraction unit 44 sums up all of the C-dimensional vectors of all of the pixels with respect to those subjected to multiplication. Accordingly, the single C-dimensional vector is generated. In other words, the single C-dimensional vector is generated for the single Attention map 180. Furthermore, in reality, the same number of the Attention maps 180 as the number of the pair feature values 182 are generated, and therefore, the same number of the C-dimensional vectors as the number of the pair feature values 182 are generated. Through the process as described above, the relationship feature extraction unit 44 obtains a weighted sum of the image feature values converted by the conversion unit (2) by using the Attention map 180 as a weight.

Moreover, the relationship feature extraction unit 44 synthesizes, by the synthesis unit, the feature value of the important area that is extracted by the Attention map 180 and the pair feature value 182 that is generated by the pair feature value generation unit 43, and outputs a relationship feature value 183. More specifically, the relationship feature extraction unit 44 is able to use a value in which the feature value of the important area and the pair feature value 182 are connected in a dimensional direction. Furthermore, the relationship feature extraction unit 44 may connect the feature value of the important area and the pair feature value 182, and thereafter, convert the connected feature value by MLP or the like to adjust the number of dimensions.

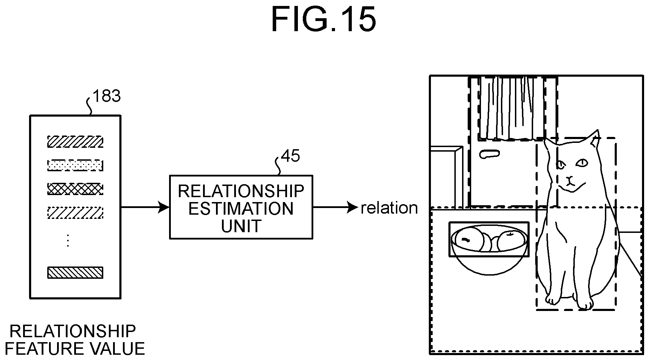

Estimation of a relationship of each pair of the Subject and the Object performed by the relationship estimation unit 45 will be described below. FIG. 15 is a diagram illustrating an example of relationship estimation according to the present embodiment. The relationship estimation unit 45 receives the relationship feature value 183 that is output by the relationship feature extraction unit 44, and outputs a relationship (relation) corresponding to each pair of the Subject and the Object. Meanwhile, the relationship estimation unit 45 may be configured with, for example, an MLP or Batch normalization that is an existing technology. Furthermore, the relationship to be output is a probability value for an estimation target relationship that is determined in advance. Specifically, for example, if the estimation target relationship is {on, behind, hold}, in the example illustrated in FIG. 15, a probability value of (0.1, 0.9, 0.2) with respect to each relationship is output as the relationship between the curtain and the cat. Further, in this case, the identification unit 22 is able to identify "behind" with the highest probability as the relationship between the curtain and the cat.

All of the processes for estimation of the relationship between the objects using the Attention map 180 as described above are collected as a relationship identification process of each of the objects, which is performed by the identification unit 22 by using the NN 40.

First, the identification unit 22 extracts, from a video, a first feature value that corresponds to a first area including an object included in the video or a second area including a person included in the video, for example. Meanwhile, for example, the video may be a video that is captured by the camera apparatus 100 in any kind of facility, such as a store, and the first area and the second area may be Bboxes. Furthermore, the extraction process as described above corresponds to the process that is performed by the image feature extraction unit 41 for extracting the image feature value 181 from the captured image 170 as explained above with reference to FIG. 11. In other words, in the example illustrated in FIG. 11, the captured image 170 corresponds to the video and the image feature value 181 corresponds to the first feature value.

Subsequently, the identification unit 22 detects an object and a person included in the video from the extracted first feature value, for example. A process of detecting the object and the person as described above corresponds to the process that is performed by the object detection unit 42 for detecting Bboxes and classes of an object and a person from the image feature value 181 that corresponds to the first feature value.

Then, the identification unit 22 generates a second feature value that is a combination of the plurality of detected objects, the plurality of detected persons, and the first feature value of one of the object and the person in at least a single pair of the object and the person, for example. The generation process as described above corresponds to the process that is performed by the pair feature value generation unit 43 for generating the pair feature value 182 in which each of the feature values of the detected objects and the detected persons corresponding to the first feature value are arranged for each of pairs as explained above with reference to FIG. 13. In other words, in the example illustrated in FIG. 13, the pair feature value 182 corresponds to the second feature value.

Subsequently, the identification unit 22 generates a first map that indicates the plurality of objects, the plurality of persons, and the relationship for identifying at least a single correlation between the object and the person based on the first feature value and the second feature value, for example. The generation process as descried above corresponds to the process that is performed by the relationship feature extraction unit 44 for generating the Attention map 180 based on the image feature value 181 that corresponds to the first feature value and the pair feature value 182 that corresponds to the second feature value as explained above with reference to FIG. 14. In other words, in the example illustrated in FIG. 14, the Attention map 180 corresponds to the first map.

Then, the identification unit 22 extracts a fourth feature value based on a third feature value that is obtained by converting the first feature value and based on the first map, for example. The extraction process as described above corresponds to the process that is performed by the relationship feature extraction unit 44 for extracting the relationship feature value 183 based on the feature value that is converted by the conversion unit (2) and the Attention map 180 that corresponds to the first map as described above with reference to FIG. 14. In other words, in the example illustrated in FIG. 14, the feature value converted by the conversion unit (2) is a feature value that is obtained by converting the image feature value 181 corresponding to the first feature value by the conversion unit (2) and corresponds to the third feature value, and the relationship feature value 183 corresponds to the fourth feature value.

Further, the identification unit 22 identifies the relationship for identifying the correlation between the object and the person from the fourth feature value, for example. The identification process as described above corresponds to the process that is performed by the relationship estimation unit 45 for estimating and identifying a relationship (relation) between the object and the person from the relationship feature value 183 that corresponds to the fourth feature value as explained above with reference to FIG. 15.

Furthermore, the identification unit 22 identifies a first person for whom the identified relationship between the object and the person temporally changes from a first relationship to a second relationship, based on the video that is acquired by the acquisition unit 21. Here, for example, the first person is a person who may have performed an abnormal behavior.

Moreover, for example, it is assumed that the relationship between the person detected from the video and a product that is one example of the object is that the person "holds" or "carries" the product, and this relationship is adopted as the first relationship. Furthermore, for example, it is assumed that the first relationship of "hold" or "carry" between the person and the product disappears in a video that is temporally later than the video in which the first relationship is identified, and a relationship between the person and the product in which the first relationship disappears is adopted as the second relationship.

Moreover, the identification unit 22 identifies, as the first person, a person for whom the relationship between the person and the object identified from the video temporally changes from the first relationship to the second relationship, that is, for example, a person who once held the product but who did not have the product at a later time. This is to identify the person as the first person who may have performed an abnormal behavior by assuming that the held product is subjected to shoplifting or the like, that is, an abnormal behavior may have been performed. Meanwhile, the identification unit 22 is able to identify the first relationship and the second relationship and then identify the first person by analyzing the scene graph, for example.

Furthermore, the first relationship and the second relationship that are changed from one to the other need not always be relationships between the same object and the person. For example, when the person cuts a security chain by using a tool, such as a chain cutter, and takes away the product, the first relationship is a relationship of "hold" between the person the chain cutter, and the second relationship is a relationship of "hold" between the person and the product.

Moreover, the first relationship and the second relationship that are changed from one to the other may be relationships between the same object and the person, but a state of the object may be changed. For example, when the product is taken away by being input in a bag, the first relationship is a relationship of "hold" between the person and an empty bag, and the second relationship is a relationship of "hold" between the person and the bag filled with the product and other contents. Here, the information processing apparatus 10 is able to determine states, such as an empty bag and a bag filled with contents by, for example, a change in the size of the bag.

Furthermore, the process of identifying the first relationship and the second relationship may include a process of identifying, from the video, an area including the object, an area including the person, the first relationship, and the second relationship by inputting the video acquired by the acquisition unit 21 to a machine learning model.

For example, the identification unit 22 inputs the video to the machine learning model, and identifies, from the video, the first area including an object, the second area including a person, and the first relationship for identifying a correlation between the object included in the first area and the person included in the second area. Further, the identification unit 22 inputs the video to the machine learning model, and identifies, from the video, a third area including an object, a fourth area including a person, and the second relationship for identifying a correlation between the object included in the third area and the person included in the fourth area.

Furthermore, the identification unit 22 identifies, for example, a first area in which an abnormal behavior on the product is performed based on the camera apparatus 100 that has performed image capturing. More specifically, the identification unit 22 identifies the firs area in which the person has performed an abnormal behavior on the product from an installation location or an imaging range of the camera apparatus 100 that has captured the video in which the relationship between the first person and the product is identified, for example.

Moreover, for example, the identification unit 22 generates skeleton information on the person included in the video by analyzing the video that is acquired by the acquisition unit 21, and identifies the relationship for identifying a correlation between the object and the person included in the video based on the generated skeleton information. More specifically, the identification unit 22 extracts a bounding box (Bbox) that encloses an area including a person in a rectangle from the video that is acquired by the acquisition unit 21, for example. Then, the identification unit 22 generates the skeleton information by inputting, for example, image data of the extracted Bbox of the person to a trained machine learning model that is constructed by using an existing algorithm, such as DeepPose or OpenPose. For example, the identification unit 22 identifies a behavior of the person holding a predetermined object that is used for shoplifting of a product, based on the generated skeleton information. Furthermore, the identification unit 22 identifies a behavior of the person holding the product based on the skeleton information.

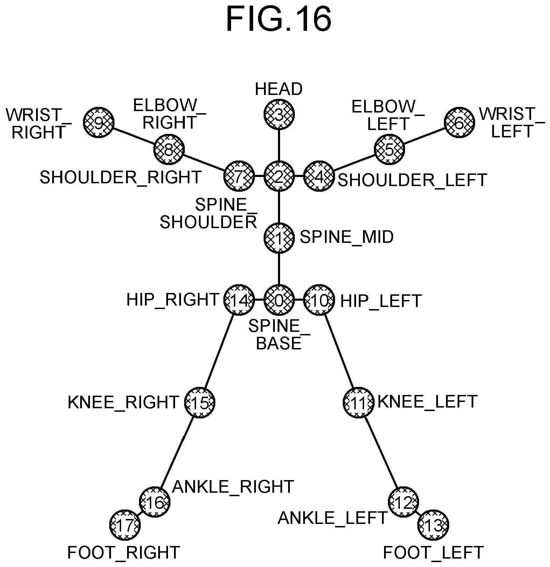

FIG. 16 is a diagram illustrating an example of the skeleton information according to the present embodiment. As the skeleton information, 18 pieces of definition information (with the numbers 0 to 17) in each of which a joint identified by a well-known skeleton model is assigned with a number may be used. For example, a right shoulder joint (SHOULDER_RIGHT) is assigned with the number 7, a left elbow joint (ELBOW_LEFT) is assigned with the number 5, a left knee joint (KNEE_LEFT) is assigned with the number 11, and a right hip joint (HIP_RIGHT) is assigned with the number 14. Therefore, it is possible to acquire coordinate information on 18 skeletons as illustrated in FIG. 16 from image data, and, for example, "X coordinate = X7, Y coordinate = Y7, and Z coordinate = Z7" is acquired as a position of the right shoulder joint with the number 7. Meanwhile, for example, a Z axis may be defined as a distance direction from an image capturing apparatus to a target, Y axis may be defined as a height direction perpendicular to the Z axis, and an X axis may be defined as a horizontal direction.

Furthermore, the identification unit 22 is able to determine a posture of the whole body of the person, such as stand, walk, squat, sit, or sleep, by using, for example, a machine learning model that is trained in advance for a skeleton pattern. For example, the identification unit 22 is able to determine the closest posture of the whole body by using a machine learning model that is trained by using Multilayer Perceptron for an angle between some joints in the skeleton information as illustrated in FIG. 16 or in a fine play view.

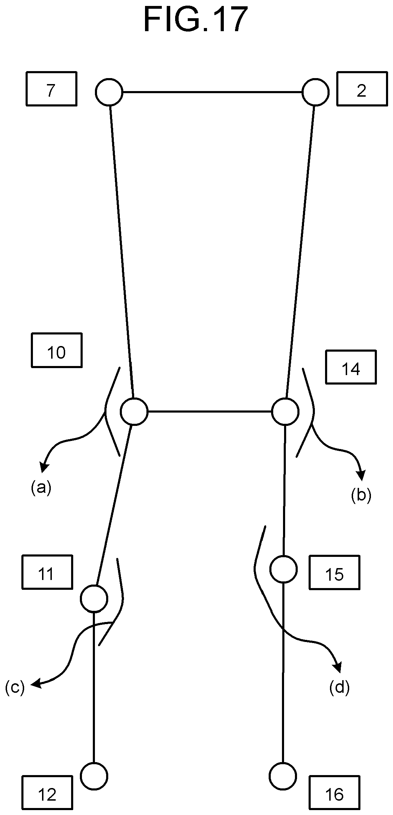

FIG. 17 is a diagram illustrating an example of determination of a posture of the whole body according to the present embodiment. As illustrated in FIG. 17, the identification unit 22 acquires, for example, an angle (a) between a joint of "HIP_LEFT" with the number 10 and a joint of "KNEE_LEFT" with the number 11 and an angle (b) between a joint of "HIP_RIGHT" with the number 14 and a joint of "KNEE_RIGHT" with the number 15. The identification unit 22 is able to detect the posture of the whole body of the person by further acquiring, for example, an angle (c) of a joint of "KNEE_LEFT" with the number 11, and an angle (d) of a joint of "KNEE_RIGHT" with the number 15.

Furthermore, the identification unit 22 is able to detect a motion of each of parts by determining a posture of the part based on a three-dimensional (3D) joint posture of the body. More specifically, the identification unit 22 is able to convert a two-dimensional (2D) joint coordinate to a 3D joint coordinate by using an existing algorithm, such as a 3D-baseline method.

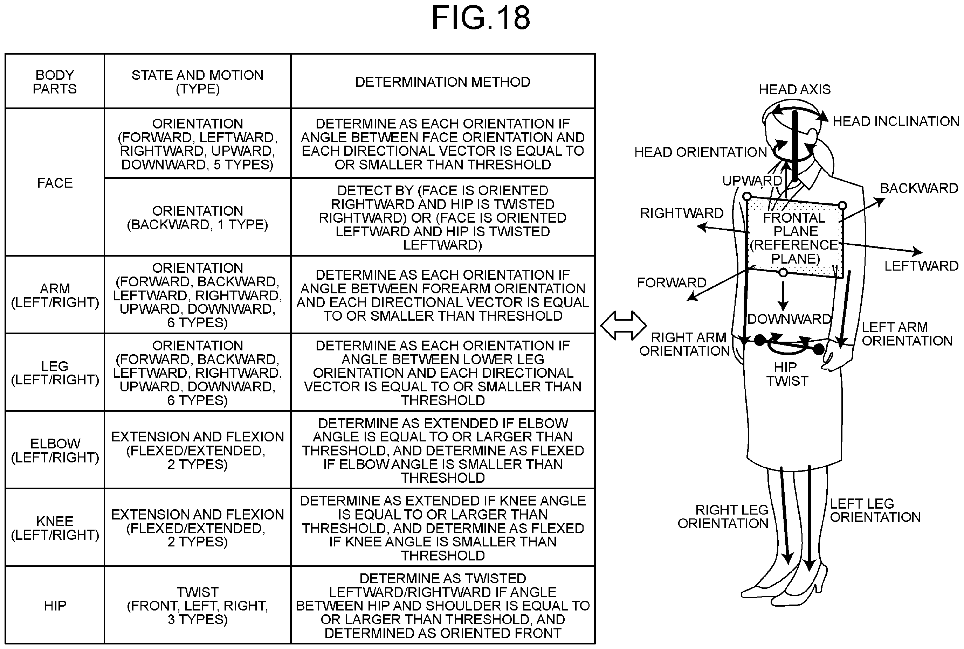

FIG. 18 is a diagram illustrating an example of detection of a motion of each of the parts. As illustrated in FIG. 18, the identification unit 22 is able to detect, with respect to a part "face", whether the face is oriented forward, leftward, backward, upward, or downward (five types), by determining whether an angle between a face orientation and each directional vector is equal to or smaller than a threshold. Meanwhile, with respect to the face orientation, for example, the identification unit 22 identifies the orientation by a vector that is defined such that "a start point is a midpoint between both ears and an end point is a nose". Furthermore, the identification unit 22 is able to detect whether the face is oriented backward by determining whether "the face is oriented rightward and a hip is twisted rightward" or "the face is oriented leftward and the hip is twisted leftward", for example.

Moreover, with respect to a part "arm", for example, the identification unit 22 is able to detect whether left and right arms are oriented in any direction among forward, backward, leftward, rightward, upward, and downward directions (six types) by determining whether an angle between forearm orientation and each directional vector is equal to or smaller than a threshold. Meanwhile, the identification unit 22 is able to detect the arm orientation by a vector that is defined such that "a start point is an elbow and an end point is a wrist".

Furthermore, with respect to a part "leg", for example, the identification unit 22 is able to detect whether left and right legs are oriented in any direction from among forward, backward, leftward, rightward, upward, and downward directions (six types) by determining whether an angle between a lower leg orientation and each directional vector is equal to or smaller than a threshold. Meanwhile, the identification unit 22 is able to detect the lower leg orientation by a vector that is defined such that "a start point is a knee and an end point is an ankle".

Moreover, with respect to a part "elbow", for example, the identification unit 22 is able to detect that the elbow is extended if an angle of the elbow is equal to or larger than a threshold and the elbow is flexed if the angle is smaller than the threshold (two types)). Meanwhile, the identification unit 22 is able to detect the angle of the elbow by an angle between a vector A that is defined such that "a start point is an elbow and an end point is a shoulder" and a vector B that is defined such that "a start point is an elbow and an end point is a wrist".

Furthermore, with respect to a part "knee", for example, the identification unit 22 is able to detect that the knee is extended if an angle of the knee is equal to or larger than a threshold and the knee is flexed if the angle is smaller than the threshold (two types). Meanwhile, the identification unit 22 is able to detect the angle of the knee by an angle between a vector A that is defined such that "a start point is a knee and an end point is an ankle" and a vector B that is defined such that "a start point is a knee and an end point is a hip".

Moreover, with respect to a part "hip", the identification unit 22 is able to detect left twist and right twist (two types) by determining whether an angle between the hip and the shoulder is equal to or smaller than a threshold, and is able to detect that the hip is oriented forward if the angle is smaller than the threshold. Furthermore, the identification unit 22 is able to detect the angle between the hip and the shoulder from a rotation angle about an axial vector C that is defined such that "a start point is a midpoint of both hips and an end point is a midpoint of both shoulders. Meanwhile, the angle between the hip and the shoulder is detected for each of a vector A that is defined such that "a start point is a left shoulder and an end point is a right shoulder" and a vector B that is defined such that "a start point is a left hip (hip (L)) and an end point is a right hip (hip (R))", for example.

Moreover, the identification unit 22 identifies a position of a person included in each of the videos that are captured by the respective camera apparatuses 100 by a first index that is different for each of the camera apparatuses 100, for example. The first index is, for example, an image coordinate system in which coordinates of a pixel at a left corner of an image that is a single frame of the video captured by the camera apparatus 100 is adopted as an origin (0, 0). The image coordinate system is different for each of the camera apparatuses 100, and therefore, the same coordinates in the images captured by the plurality of camera apparatuses 100 do not indicate the same position in a real space. Therefore, the identification unit 22 identifies the positions of the persons identified by the first indices by a second index that is common among the plurality of camera apparatuses 100, for example. The second index is a coordinate system that is common among the plurality of camera apparatuses 100 and that is obtained by, for example, converting the image coordinate system that is the first index by projective transformation (holography) coefficient, and is referred to as a "floor map coordinate system" as a comparison with the image coordinate system. Transformation from the image coordinate system to the floor map coordinate system will be described in detail below.

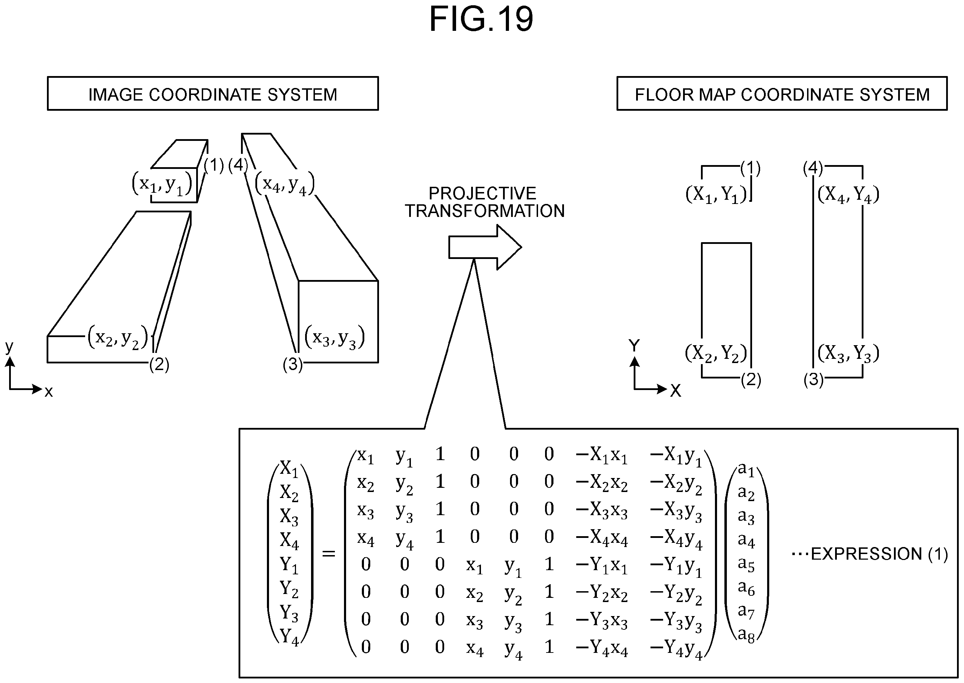

Calculation of the projective transformation coefficient that is used for transformation from the image coordinate system to the floor map coordinate system will be described below. FIG. 19 is a diagram illustrating an example of calculation of the projective transformation coefficient according to the present embodiment. As illustrated in FIG. 19, the identification unit 22 identifies arbitrary corresponding points (1) to (4) that correspond between the image coordinate system and the floor map coordinate system, for example. For example, the identification unit 22 identifies a point (x₁, y₁), a point (x₂, y₂), a point (x₃, y₃), and a point (x₄, y₄) from the image coordinate system. Similarly, for example, the identification unit 22 identifies a point (X₁, Y₁), a point (x₂, Y₂), a point (X₃, Y₃), and a point (X₄, Y₄) from the floor map coordinate system. Then, the identification unit 22 calculates a projective transformation coefficient aᵢ (i = 1 to 8) for transformation from the image coordinate system (x, y) to the floor map coordinate system (X, Y) by solving simultaneous equations as indicated by Expression (1) in FIG. 19, for example. Meanwhile, arrangement configurations of the camera apparatuses 100 and floor configurations in any kind of facility, such as a store, are generally fixed, and therefore, it is sufficient to estimate the projective transformation coefficient once. Further, the corresponding points may be designated by an administrator or the like of the information processing system 1, or points at the same locations may be identified as the corresponding points by image analysis.

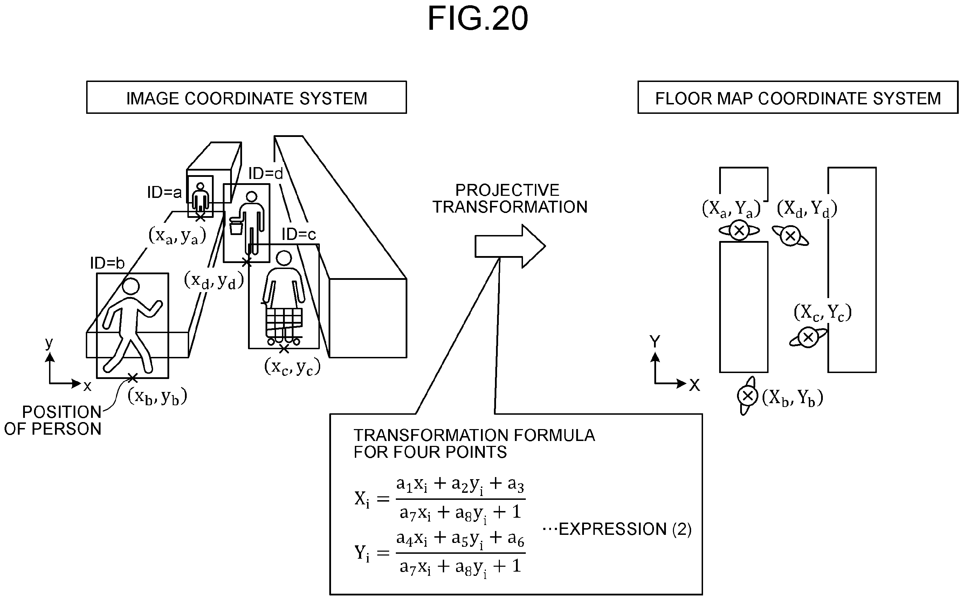

Furthermore, the identification unit 22 transforms the positions of the persons identified by the image coordinate system to the floor map coordinate system by using the calculated projective transformation coefficient and identifies the position, for example. FIG. 20 is a diagram illustrating an example of transformation from the image coordinate system to the floor map coordinate system according to the present embodiment. As illustrated in FIG. 20, the identification unit 22 adopts, for example, image coordinates (x, y) of lower end center of the Bbox of each of the persons as the position of the person identified by the image coordinate system, and calculates the floor map coordinates (X, Y) by transforming the coordinates by using the projective transformation coefficient. Meanwhile, the floor map coordinates (X, Y) are coordinates that indicate the position of the person in the floor map coordinate system and that are common among the plurality of camera apparatuses 100. In the example illustrated in FIG. 20, for example, the points (xₐ, yₐ) to (x_{d}, y_{d}) that represent the positions of the persons identified by the image coordinate system are transformed to the points (Xₐ, Yₐ) to (X_{d}, Y_{d}) that represent the positions of the persons identified by the floor map coordinate system by using a transformation formula as represented by Expression (2) in FIG. 20.

Referring back to explanation of FIG. 4, the determination unit 23 determines whether the person has performed an abnormal behavior on the product on the outside of the imaging range of the camera apparatus 100 based on the relationship that is identified by the identification unit 22 and that identifies a correlation between the object and the person included in the video, for example. Here, the person is, for example, a person who is identified by the identification unit 22 and for whom the relationship between the person and the object identified from the video temporally changes from the first relationship to the second relationship.

More specifically, the first person is a person who indicates, for example, the first relationship of "hold" or "carry" with the product that is the object, and indicates the second relationship in which the first relationship disappears in a video that is temporally later than the video in which the first relationship is identified. With respect to the first person as described above, the determination unit 23 is able to determine that the person has performed an abnormal behavior, such as shoplifting, by, for example, putting the holding product in a bag on the outside of the imaging range of the camera apparatus 100. In other words, the determination unit 23 determines whether the person has performed an abnormal behavior, such as shoplifting or a behavior that leads to shoplifting, on the product on the outside of the imaging range of the camera apparatus 100 based on the first relationship and the second relationship that are identified by the identification unit 22, for example.

Furthermore, for example, it is assumed that the first relationship of "hold" or the like is indicated between the person and a chain cutter that is the object, and the second relationship of "hold" or the like is indicated between the person and the product that is the object in a video that is temporally later than the video in which the first relationship is identified. In this case, the determination unit 23 is able to determine that the person has performed an abnormal behavior on the product.

Moreover, for example, it is assumed that the first relationship of "hold" or the like is indicated between the person and an empty bag that is the object, and the second relationship of "hold" or the like is indicated between the person and the bag filled with contents in a video that is temporally later than the video in which the first relationship is identified. In this case, the determination unit 23 is able to determine that the person has performed an abnormal behavior on the product.

Furthermore, if the person that is included in the second area and the person included in the fourth area, which are identified by the identification unit 22 from the video, are identical, the determination unit 23 compares the first relationship and the second relationship that are identified by the identification unit 22 and a rule that is set in advance. Here, the rule that is set in advance may be, for example, a rule that is set in the rule DB 16. Moreover, the determination unit 23 determines whether the person has performed an abnormal behavior on the product on the outside of the imaging range of the camera apparatus 100 based on, for example, a comparison result among the first relationship, the second relationship, and the rule that is set in advance.

Furthermore, the determination unit 23 determines whether the person included in each of the videos is an identical person based on the position of the person that is identified by the identification unit 22 by using the second index, for example. For example, the second index is the floor map coordinate system that is common among the plurality of camera apparatuses 100. Therefore, for example, when the floor map coordinate system indicated by the position of the person included in each of the videos captured by the plurality of camera apparatuses 100 is the same or located nearby in a predetermined range, the determination unit 23 is able to determine that the person included in each of the videos is an identical person.

Referring back to explanation of FIG. 4, the notification unit 24 gives an alert based on a determination result on whether the person has performed an abnormal behavior on the product on the outside of the imaging range of the camera apparatus 110, for example. For example, when the determination unit 23 determines that the person has performed an abnormal behavior on the product on the outside of the imaging range of the camera apparatus 110, the notification unit 24 gives an alert. The alert may be, for example, output of a voice or issuance of a message notice on a screen. Further, a notification destination of the alert may be, for example, an output device included in the information processing apparatus 10, an external apparatus, or a different output apparatus that is communicably connected to the information processing apparatus 10 via the network 50.

Furthermore, the notification unit 24 gives an alert indicating that an abnormality has occurred on a first object, in association with the first area, for example. Meanwhile, the first area is, for example, an area that is identified by the identification unit 22 as an area in which the person may have performed an abnormal behavior on the product. Moreover, the alert may include information on the position of the first area, for example.

### Flow of process

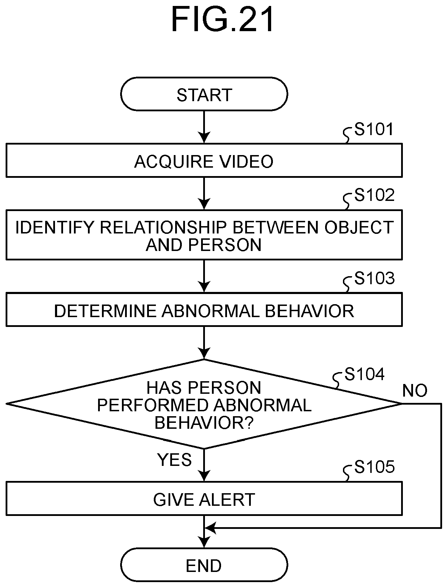

The flow of an abnormal behavior notification process performed by the information processing apparatus 10 will be described below. FIG. 21 is a flowchart illustrating the flow of the abnormal behavior notification process according to the present embodiment.

First, as illustrated in FIG. 21, the information processing apparatus 10 acquires, from the image capturing DB 13, a video in which a predetermined imaging range is captured in any kind of facility, such as a store, by the camera apparatus 100, for example (Step S101). Meanwhile, the video that is captured by the camera apparatus 100 is transmitted from the camera apparatus 100 to the information processing apparatus 10 as needed, and stored in the image capturing DB 13. Specifically, the information processing apparatus 10 acquires a plurality of videos which are captured by the plurality of camera apparatuses 100 arranged in a store and in which different areas are captured by the plurality of camera apparatuses 100.

Furthermore, the information processing apparatus 10 inputs the videos acquired at Step S101 to the machine learning model and identifies, from the videos, an area including an object, an area including a person, and a relationship between the object and the person, for example (Step S102). Specifically, the information processing apparatus 10 analyzes a video in which the first area is captured among the plurality of acquired videos, and identifies a first relationship that identifies a correlation between the object and the person included in the video, for example. Moreover, the information processing apparatus 10 analyzes a video in which the second area is captured among the plurality of acquired videos, and identifies the second relationship that identifies a correlation between the object and the person included in the video. For example, the person appears in the first area. Further, the person moves to the second area through an area that is on the outside of the imaging ranges of the camera apparatuses 100. In this case, for example, the information processing apparatus 10 analyzes the video in which the first area is captured, and recognizes the first relationship indicating that the person "holds" each of the product and a predetermined object (for example, a bag) that is used for shoplifting of the product. Furthermore, for example, the information processing apparatus 10 analyzes the video in which the second area is captured, and recognizes the second relationship indicating that the person "holds" the predetermined object that is used for shoplifting of the product. In other words, the product that is "held" by the person in the first relationship is not "held" in the second relationship. Moreover, the predetermined object that is used for shoplifting of the product that is "held" by the person in the first relationship is continuously "held" in the second relationship. Meanwhile, the areas including the object and the person may be, for example, bounding boxes (Bbox) that are rectangles enclosing the object and the person in the video. Furthermore, the relationship between the object and the person may be that, for example, the person holds the product or the person carries the product. Meanwhile, a time of the video in which the second area is captured is later than a time of the video in which the first area is captured.

Subsequently, the information processing apparatus 10 determines whether the person has performed an abnormal behavior on the product based on, for example, the relationship between the object and the person that is identified at Step S102 (Step S103). Specifically, the information processing apparatus 10 determines whether the person has performed an abnormal behavior on the product on the outside of the imaging range of the camera apparatus 100 between the first area and the second area based on, for example, the first relationship and the second relationship. Specifically, when a temporal combination of the first relationship and the second relationship matches a rule that is set in advance, the information processing apparatus 10 determines that the person has performed an abnormal behavior on the product. For example, the information processing apparatus 10 recognizes that the predetermined object that is "held" by the person in the first relationship and that is used for shoplifting of the product is continuously "held" in the second relationship. Further, the information processing apparatus 10 recognizes that the product that is "held" by the person in the first relationship is not "held" in the second relationship. In this case, the information processing apparatus 10 determines that the person has performed an abnormal behavior on the product in an area that is located on the outside of the imaging ranges of the plurality of camera apparatuses 100. The abnormal behavior described herein indicates, for example, shoplifting or a behavior that leads to shoplifting on the outside of the imaging ranges of the camera apparatuses 100. If it is determined that the person has not performed an abnormal behavior on the product (Step S104: No), the abnormal behavior notification process illustrated in FIG. 21 is terminated.

In contrast, if it is determined that the person has performed an abnormal behavior on the product (Step S104: Yes), the information processing apparatus 10 gives an alert, for example (Step S105). Specifically, the information processing apparatus 10 gives an alert indicating that shoplifting or a behavior that leads to shoplifting has occurred in an area that is located between the first area and the second area and that is located outside of the imaging ranges of the plurality of camera apparatuses 100, for example. After execution of Step S105, the abnormal behavior notification process illustrated in FIG. 21 is terminated.

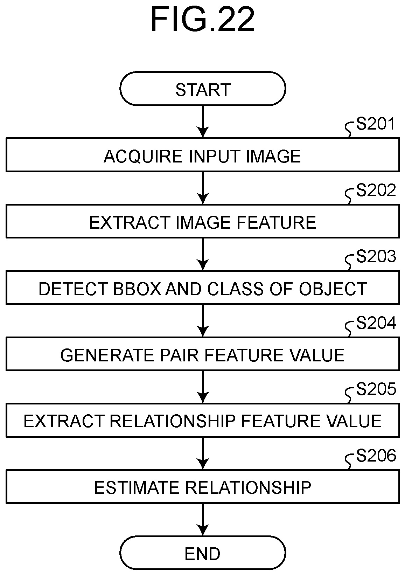

A flow of the relationship estimation process performed by the information processing apparatus 10 will be described below. FIG. 22 is a flowchart illustrating the flow of the relationship estimation process according to the present embodiment. The relationship estimation process illustrated in FIG. 22 is a process of estimating a relationship between an object and a person using the NN 40 as explained above with reference to FIGS. 10 to 15, for example.

First, the information processing apparatus 10 acquires, for example, a video in which a predetermined imaging range is captured in any kind of facility, such as a store, by the camera apparatus 100, that is, an input image, from the image capturing DB 13 (Step S201). Meanwhile, the input image includes an image of a single frame of a video, and when a video is stored in the image capturing DB 13, a single frame is acquired as the input image from the video.

Furthermore, the information processing apparatus 10 extracts the image feature value 181 as an image feature of the input image, from the input image that is acquired at Step S201, for example (Step S202).

Subsequently, the information processing apparatus 10 detects, for example, a Bbox that indicates a location of each of objects included in the video and a class that indicates a type of each of the objects from the image feature value 181 that is extracted at Step S202 by using an existing technology (Step S203). Meanwhile, each of the objects detected herein may include a person, and in the following explanation, each of the objects may include a person.

Then, the information processing apparatus 10 generates, as the pair feature value 182, the second feature value that is a combination of the first feature values included in the objects in combinations of the objects detected at Step S203, for example (Step S204).

Subsequently, the information processing apparatus 10 synthesizes, for example, the feature value of an area that is important for estimation of the relationship and that is extracted by the Attention map 180 and the pair feature value 182, and extracts the relationship feature value 183 (Step S205). Meanwhile, the Attention map 180 is generated from the pair feature value 182 that is extracted at Step S204.

Furthermore, the information processing apparatus 10 estimates the relationship between the objects detected from the image, based on the relationship feature value 183 that is extracted at Step S205, for example (Step S206). Meanwhile, estimation of the relationship may be calculation of a probability for each type of the relationship, for example. After execution of Step S206, the relationship estimation process as illustrated in FIG. 22 is terminated.

### Effects

As described above, the information processing apparatus 10 acquires a video that is captured by the one or more camera apparatuses 100, identifies a relationship for identifying a correlation between an object and a person included in the video by analyzing the acquired video, determines whether the person has performed an abnormal behavior on a product on an outside of an imaging range of the camera apparatus 100 based on the identified relationship, and gives an alert based on a determination result on whether the person has performed the abnormal behavior on the product on the outside of the imaging range.

In this manner, the information processing apparatus 10 identifies a relationship between an object and a person from a video, determines whether the person has performed an abnormal behavior, such as shoplifting, on the outside of an imaging range of the camera apparatus 100 based on the identified relationship, and gives an alert. With this configuration, the information processing apparatus 10 is able to more accurately determine, from the video, that the person is performing an abnormal behavior and give an alert.

Furthermore, the information processing apparatus 10 acquires a plurality of videos that are captured by the plurality of camera apparatuses 100 installed in a store and that include different areas captured by the plurality of camera apparatuses 100, identifies a first relationship for identifying a correlation between an object and the person included in a video in which a first area is captured by analyzing the video in which the first area is captured among the plurality of acquired videos, identifies a second relationship for identifying a correlation between an object and the person included in a video in which a second area is captured by analyzing the video in which the second area is captured among the plurality of acquired videos, determines whether the person has performed an abnormal behavior on a product in an area that is located between the first area and the second area and that is located on an outside of imaging ranges of the plurality of camera apparatuses 100 based on the first relationship and the second relationship, and gives an alert if it is determined that the person has performed the abnormal behavior.

With this configuration, the information processing apparatus 10 is able to more accurately determine, from the video, that the person is performing an abnormal behavior.

Moreover, a time of the video in which the second area is captured is later than a time of the video in which the first area is captured.

With this configuration, the information processing apparatus 10 is able to more accurately identify, from the video, an area in which the person is performing an abnormal behavior.

Furthermore, the first relationship indicates that the person holds the product and a predetermined object that is used for shoplifting of the product, the second relationship indicates that the person holds the predetermined object that is used for shoplifting of the product, and when the predetermined object that is held by the person in the first relationship is also held in the second relationship and when the product that is held in the person in the first relationship is not held in the second relationship, the information processing apparatus 10 determines that the person has performed an abnormal behavior on the product in an area that is located between the first area and the second area and that is located on an outside of imaging ranges of the plurality of camera apparatuses 100.

With this configuration, the information processing apparatus 10 is able to more accurately determine, from the video, that the person is performing an abnormal behavior.

Moreover, the information processing apparatus 10 identifies a first person for whom the identified relationship temporally changes from a first relationship to a second relationship based on the acquired video, and the process that is performed by the information processing apparatus 10 for determining whether the person has performed an abnormal behavior on the product includes a process of determining whether the first person has performed an abnormal behavior on the product on the outside of the imaging range based on the identified relationship.

With this configuration, the information processing apparatus 10 is able to more accurately determine, from the video, that the person is performing an abnormal behavior.

Furthermore, the process that is performed by the information processing apparatus 10 for identifying the relationship includes a process of identifying, from the video, a first area including the object, a second area including the person, and a first relationship for identifying a correlation between the object included in the first area and the person included in the second area by inputting the acquired video to a machine learning model, and identifying, from the video, a third area including the object, a fourth area including the person, and a second relationship for identifying a correlation between the object included in the third area and the person included in the fourth area by inputting the acquired video to a machine learning model, and the process for determining whether the person has performed an abnormal behavior on the product includes, when the person included in the second area and the person included in the fourth area are identical, a process of determining whether the person has performed an abnormal behavior on the product by comparing the identified first relationship, the identified second relationship, and a rule that is set in advance.

With this configuration, the information processing apparatus 10 is able to more accurately determine, from the video, that the person is performing an abnormal behavior.

Moreover, the information processing apparatus 10 identifies an area that is an area in which the person has performed an abnormal behavior on the product, that is located between the first area and the second area, and that is located on an outside of imaging ranges of the plurality of camera apparatuses 100, based on the plurality of the camera apparatuses 100 that have performed image capturing, and the process that is performed by the information processing apparatus 10 for giving the alert includes a process of giving the alert indicating occurrence of abnormality on the product in association with the identified area that is located on the outside of the imaging ranges of the plurality of camera apparatuses 100.

With this configuration, the information processing apparatus 10 is able to more accurately give a notice indicating that the person is performing an abnormal behavior from the video.

Furthermore, the process that is performed by the information processing apparatus 10 for determining whether the person has performed an abnormal behavior on the product includes a process of determining whether the person has performed an abnormal behavior including one of shoplifting and a behavior that leads to shoplifting on the product on an outside of the imaging range of the camera apparatus 100 based on the identified first relationship and the identified second relationship.

With this configuration, the information processing apparatus 10 is able to more accurately determine, from the video, that the person is performing an abnormal behavior, such as shoplifting.

Moreover, the process that is performed by the information processing apparatus 10 for identifying the first person includes a process of generating a scene graph that identifies the relationship for each of the persons included in the video by inputting the acquired video to a machine learning model, and identifying the first person by analyzing the scene graph.

With this configuration, the information processing apparatus 10 is able to more accurately determine, from the video, that the person is performing an abnormal behavior.

Furthermore, the process that is performed by the information processing apparatus 10 for identifying the relationship includes a process of extracting a first feature value that corresponds to one of the object and the person from the video, detecting the object and the person included in the video from the extracted first feature value, generating a second feature value that is a combination of the plurality of detected objects, the plurality of detected persons, and the first feature value of one of the object and the person in at least a single pair of the object and the person, generating a first map that indicates the plurality of objects, the plurality of persons, and the relationship for identifying at least a single correlation between the object and the person based on the first feature value and the second feature value, extracting a fourth feature value based on a third feature value that is obtained by converting the first feature value and based on the first map, and identifying the relationship from the fourth feature value.

With this configuration, the information processing apparatus 10 is able to more accurately determine, from the video, that the person is performing an abnormal behavior.

Moreover, the process that is performed by the information processing apparatus 10 for identifying the relationship includes generating skeleton information on the person by analyzing the acquired video, identifying the first relationship based on the generated skeleton information, and identifying the second relationship based on the generated skeleton information.

With this configuration, the information processing apparatus 10 is able to more accurately determine, from the video, that the person is performing an abnormal behavior.

Furthermore, the information processing apparatus 10 identifies a position of the person included in each of the videos that are captured by the respective camera apparatuses 100 by a first index that is different for each of the camera apparatuses 100, identifies the positions of the persons identified by the first indices by using a second index that is common among the plurality of camera apparatuses 100, and determines whether the persons included in the respective videos are an identical person based on the positions of the persons identified by using the second index.

With this configuration, the information processing apparatus 10 is able to more accurately determine, from the video, that the person is performing an abnormal behavior.

### System

The processing procedures, control procedures, specific names, and information including various kinds of data and parameters illustrated in the above-described document and drawings may be arbitrarily changed unless otherwise specified. In addition, specific examples, distributions, values, and the like described in the embodiments are examples, and may be changed arbitrarily.

Furthermore, specific forms of distribution and integration of the components of each of the apparatuses are not limited to those illustrated in the drawings. In other words, all or part of the components may be functionally or physically distributed or integrated in arbitrary units depending on various loads or use conditions. Moreover, for each processing function performed by each apparatus, all or any part of the processing function may be implemented by a CPU and a program analyzed and executed by the CPU or may be implemented as hardware by wired logic.

### Hardware

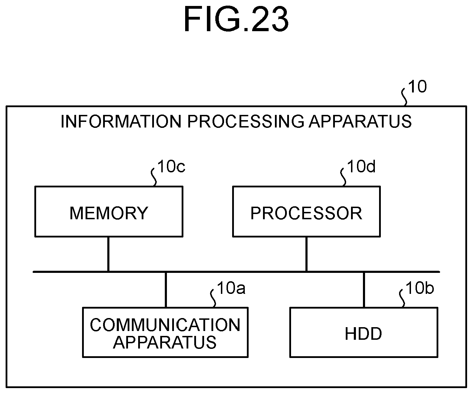

FIG. 23 is a diagram for explaining a hardware configuration example of the information processing apparatus 10. As illustrated in FIG. 23, the information processing apparatus 10 includes a communication apparatus 10a, a Hard Disk Drive (HDD) 10b, a memory 10c, and a processor 10d. Further, all of the units illustrated in FIG. 23 are connected to one another via a bus or the like.

The communication apparatus 10a is a network interface card or the like and performs communication with a different information processing apparatus. The HDD 10b stores therein a program for operating the functions illustrated in FIG. 4 and a DB.

The processor 10d is a hardware circuit that reads a program for executing the same processes as each of the processing units illustrated in FIG. 4 from the HDD 10b or the like and loads the program onto the memory 10c to implement each of the functions explained in FIG. 4 or the like. In other words, the process implements the same functions as those of each of the processing units included in the information processing apparatus 10. Specifically, the processor 10d reads the program with the same functions as those of the acquisition unit 21, the identification unit 22, the determination unit 23, and the notification unit 24 from the HDD 10b or the like. Further, the processor 10d executes the process for performing the same processes as those of the identification unit 22 or the like.

In this manner, the information processing apparatus 10 operates as an information processing apparatus that executes an operation control process by reading the program for performing the same processes as those of each of the processing units illustrated in FIG. 4 and executing the program. Further, the information processing apparatus 10 may implement the same functions as those of the embodiments as described above by causing a medium reading apparatus to read the program from a recording medium and executing the read program. Meanwhile, the program described in the different embodiment need not always be executed by the information processing apparatus 10. For example, the present embodiment may be applied in the same manner to a case in which a different information processing apparatus executes the program or a case in which the information processing apparatus 10 and a different information processing apparatus executes the program in a cooperative manner.

Furthermore, the program that executes the same processes as those of each of the processing units illustrated in FIG. 4 may be distributed via a network, such as the Internet. Moreover, the program may be recorded in a computer readable recording medium, such as a hard disk, a flexible disk (FD), a compact disc (CD)-ROM, a Magneto-Optical disk (MO), or a Digital Versatile Disc (DVD), and by being read by a computer from the recording medium.

According to one aspect, it is possible to more accurately determine that a person is performing an abnormal behavior from a video and give a notice.

## Claims

1. An information processing program that causes a computer(10) to execute a process comprising:
acquiring a video that is captured by one or more camera apparatuses;
identifying a behavior between an object and a person included in the video by analyzing the acquired video;
determining whether the person has performed an abnormal behavior on a product on an outside of an imaging range of the camera apparatus based on the identified behavior; and
giving an alert based on a determination result on whether the person has performed the abnormal behavior on the product on the outside of the imaging range.

2. The information processing program according to claim 1, wherein the process further includes:
acquiring a plurality of videos that are captured by a plurality of camera apparatuses installed in a store and that include different areas captured by the plurality of camera apparatuses;
identifying a first relationship for identifying a correlation between an object and the person included in a video in which a first area is captured by analyzing the video in which the first area is captured among the plurality of acquired videos;
identifying a second relationship for identifying a correlation between an object and the person included in a video in which a second area is captured by analyzing the video in which the second area is captured among the plurality of acquired videos;
determining whether the person has performed an abnormal behavior on a product in an area that is located between the first area and the second area and that is located on an outside of imaging ranges of the plurality of camera apparatuses based on the first relationship and the second relationship; and
giving an alert if it is determined that the person has performed the abnormal behavior.

3. The information processing program according to claim 2, wherein a time of the video in which the second area is captured is later than a time of the video in which the first area is captured.

4. The information processing program according to claim 3, wherein
the first relationship indicates that the person holds the product and a predetermined object that is used for shoplifting of the product, and
the second relationship indicates that the person holds the predetermined object that is used for shoplifting of the product, and
the process further includes:
determining, when the predetermined object that is held by the person in the first relationship is also held in the second relationship and when the product that is held in the person in the first relationship is not held in the second relationship, that the person has performed an abnormal behavior on the product in an area that is located between the first area and the second area and that is located on an outside of imaging ranges of the plurality of camera apparatuses.

5. The information processing program according to claim 1, wherein the process further includes:
identifying a first person for whom the identified relationship temporally changes from a first relationship to a second relationship based on the acquired video, wherein
the determining whether the person has performed an abnormal behavior on the product includes determining whether the first person has performed an abnormal behavior on the product on the outside of the imaging range based on the identified relationship.

6. The information processing program according to claim 1, wherein
the identifying the relationship includes
identifying, from the video, a first area including the object, a second area including the person, and a first relationship for identifying a correlation between the object included in the first area and the person included in the second area by inputting the acquired video to a machine learning model; and
identifying, from the video, a third area including the object, a fourth area including the person, and a second relationship for identifying a correlation between the object included in the third area and the person included in the fourth area by inputting the acquired video to a machine learning model, and
the determining whether the person has performed an abnormal behavior on the product includes, when the person included in the second area and the person included in the fourth area are identical, determining whether the person has performed an abnormal behavior on the product by comparing the identified first relationship, the identified second relationship, and a rule that is set in advance.

7. The information processing program according to claim 2, wherein the process further includes:
identifying an area that is an area in which the person has performed an abnormal behavior on the product, that is located between the first area and the second area, and that is located on an outside of imaging ranges of the plurality of camera apparatuses, based on the plurality of the camera apparatuses that have performed image capturing, wherein
the giving the alert includes giving the alert indicating occurrence of abnormality on the product in association with the identified area that is located on the outside of the imaging ranges of the plurality of camera apparatuses.

8. The information processing program according to claim 6, wherein the determining whether the person has performed an abnormal behavior on the product includes determining whether the person has performed an abnormal behavior including one of shoplifting and a behavior that leads to shoplifting on the product on an outside of an imaging range of the camera apparatus based on the identified first relationship and the identified second relationship.

9. The information processing program according to claim 5, wherein
the identifying the first person includes
generating a scene graph that identifies the relationship for each of the persons included in the video by inputting the acquired video to a machine learning model; and
identifying the first person by analyzing the scene graph.

10. The information processing program according to claim 1, wherein
the identifying the relationship includes
extracting a first feature value that corresponds to one of the object and the person from the video;
detecting the object and the person included in the video from the extracted first feature value;
generating a second feature value that is a combination of the plurality of detected objects, the plurality of detected persons, and the first feature value of one of the object and the person in at least a single pair of the object and the person;
generating a first map that indicates the plurality of objects, the plurality of persons, and the relationship for identifying at least a single correlation between the object and the person based on the first feature value and the second feature value;
extracting a fourth feature value based on a third feature value that is obtained by converting the first feature value and based on the first map; and
identifying the relationship from the fourth feature value.

11. The information processing program according to claim 2, wherein
the identifying the relationship includes
generating skeleton information on the person by analyzing the acquired video;
identifying the first relationship based on the generated skeleton information; and
identifying the second relationship based on the generated skeleton information.

12. The information processing program according to claim 1 or 2, wherein the process further includes:
identifying a position of the person included in each of the videos that are captured by the respective camera apparatuses 100 by a first index that is different for each of the camera apparatuses;
identifying the positions of the persons identified by the first indices by using a second index that is common among the plurality of camera apparatuses; and
determining whether the persons included in the respective videos are an identical person based on the positions of the persons identified by using the second index.

13. An information processing method carried out by a computer, comprising:
acquiring a video that is captured by one or more camera apparatuses;
identifying a behavior between an object and a person included in the video by analyzing the acquired video;
determining whether the person has performed an abnormal behavior on a product on an outside of an imaging range of the camera apparatus based on the identified behavior; and
giving an alert based on a determination result on whether the person has performed the abnormal behavior on the product on the outside of the imaging range.

14. An information processing apparatus comprising:
a control unit(20) configured to:
acquire a video that is captured by one or more camera apparatuses;
identify a behavior between an object and a person included in the video by analyzing the acquired video;
determine whether the person has performed an abnormal behavior on a product on an outside of an imaging range of the camera apparatus based on the identified behavior; and
give an alert based on a determination result on whether the person has performed the abnormal behavior on the product on the outside of the imaging range.
